# EUROPEAN PATENT APPLICATION

(11) **EP 0 899 737 A2**
(43) Date of publication of application: **03.03.1999**
(21) Application number: 98306540.0
(22) Date of filing: 17.08.1998
(51) Int. Cl.: G11B 27/031, G11B 27/28, G06F 17/30, G10L 5/04

(54) **Script recognition using speech recognition**

(30) Priority: 18.08.1997 US 914905
(71) Applicant: TEKTRONIX, INC., Wilsonville, Oregon 97070-1000 (US)
(72) Inventor: Sinclair, Anita J., London, N.5 (GB); Edwards, Forrest, Wilsonville, Oregon 97070-9599 (US)
(74) Representative: Molyneaux, Martyn William

(57) **Abstract**

Script recognition using speech recognition for use in editing of video or film clips uses preferably a grammar based speech recognition engine. A script file and audio dialog file are input a speech recognition system, and the script file is processed to generate a grammar file, which in turn is reduced to a binary context file compatible with a specific speech recognition engine. The script file and audio file are used to define variable parameters for the speech recognition engine. The audio file is broken up into utterances which are processed by the speech recognition engine according to the variable parameters and the context file. The best "guess" from the speech recognition engine is fitted to the script file to determine a match. Mismatched utterances are fed back to the utterance determining step to determine a new search point. With a match the audio file is marked with the corresponding location in the script or the script file is time marked with the corresponding video clip time code. Video or film clips may then be accessed for editing by indicating a place in the script or the dialog.

## Description

### CROSS-REFERENCE TO RELATED APPLICATIONS

Not Applicable

### STATEMENT REGARDING FEDERALLY SPONSORED RESEARCH OR DEVELOPMENT

Not Applicable

### BACKGROUND OF THE INVENTION

The present invention relates to video and film systems, and more particularly to script recognition using speech recognition techniques in order to increase the creativity and productivity of film and video editors.

Script recognition is the process of matching dialog with a preexisting script. The dialog may be associated with a motion picture, television show, video production, theatrical production, radio show or any presentation that follows a script. The purpose of script recognition is to relate dialog to a script to simplify editing of the dialog or material related to the dialog, such as video or film clips. Once the script is associated with the video or film clips, simplifications may be made in the editing process, such as cataloging clips and locating portions of the clips by selecting them from the integrated script.

Currently efforts in voice recognition are focused on dictation, voice command/control and telephony. Script recognition does not fit into any of these applications directly. Products for dictation support large vocabularies and are somewhat speaker independent, but don't support continuous speech. Products for voice command and control, which may be used for adding navigation to applications, are sometimes user independent, but have limited vocabularies and continuous speech is achieved by using entire phrases as if they were words in a vocabulary. These voice command products are used as supplements to a mouse and menu system, and work much like macros associated with function keys. Commands frequently follow the menu structures, so recovery from user and system errors is poor and there is a general lack of effort on defining voice command-keyboard-mouse command flow. Telephony/kiosk packages that support user independence and large vocabularies are the closest match for speech recognition, but are limited to predeveloped grammars.

What is desired is script recognition using speech recognition techniques in order to simplify video or film editing.

### BRIEF SUMMARY OF THE INVENTION

Accordingly the present invention provides script recognition using speech recognition by converting a script file representing a script for an image sequence into a context file via an intermediate grammar file and by dividing an audio file corresponding to the dialog for the image sequence into utterances. The utterances and the context file are input to a speech recognition engine to derive a text for the utterances, and the text is fitted against the script file to determine a match. When the match occurs, the script file is marked with a time code from the image sequence corresponding to the dialog in the audio file that produced the match. Alternatively the audio file is location marked with respect to the script file. The resulting marked script/audio files are available for an operator performing an edit.

The objects, advantages and other novel features of the present invention are apparent from the following detailed description when read in conjunction with the appended claims and attached drawing.

### BRIEF DESCRIPTION OF THE SEVERAL VIEWS OF THE DRAWING

Fig. 1 is a block diagram of an editing system incorporating script recognition according to the present invention.

Fig. 2 is a block diagram view of a script recognition system for the editing system of Fig. 1 according to the present invention.

Fig. 3 is a block diagram view of a portion of the script recognition system according to the present invention.

### DETAILED DESCRIPTION OF THE INVENTION

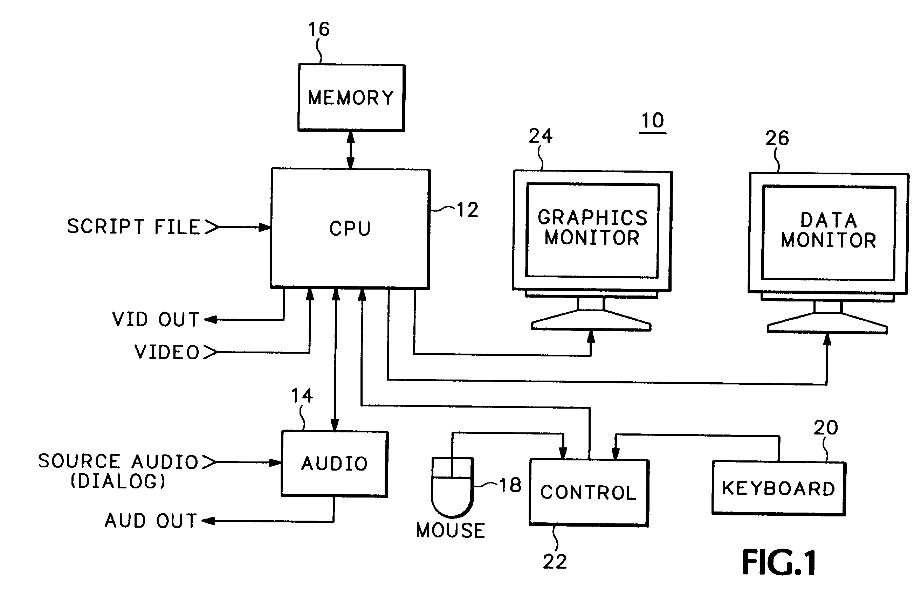

A typical editing system **10**, as shown in Fig. 1, has a central processing unit (CPU) **12** to which are input digitized video from a source (not shown), such as video tape recorders, digital disk recorders, telecines, etc. The audio from the source, including dialog, also is input to the CPU **12** via an audio processor **14** where it may be digitized, if not already in digital form. Also input to the CPU **12** is a script file via any suitable means, such as tape, disc, word processor or the like. The CPU **12** has a large storage capacity for editing purposes and an associated random access memory **16** in which the digitized video and audio are stored for subsequent retrieval during the editing process. Operator input/output (I/O) devices for communicating with the CPU **12** may include a mouse **18**, a keyboard **20** and a specialized editing control console **22**. The CPU **12** provides a graphic display on one monitor **24** and a data display on another monitor **26** for interaction with the operator, which monitors may be combined into a single monitor with both graphics and data displays.

The most basic task in script recognition is to take a video clip and locate the point in the script where the dialog from the clip occurs. Clips then may be cataloged by processing several of them in this manner. Once the clips are processed, a story board may be generated by displaying "in" and "out" shots for each clip or scene. By opening up a script window and highlighting a point in the script, all associated clips may be called in. In a similar manner the frames within a clip where the dialog occurred may be located. Another application is, while editing a clip or calling in a new clip, to find out where the clip fits within the script.

To perform script recognition a voice/speech recognition algorithm is used. For script recognition a grammar based speech recognition algorithm is preferred that supports speaker independence and large vocabularies. The grammar for the speech recognition algorithm is developed by processing the script. A grammar is essentially a template of a sentence or two which includes key words that the user is expected to say, along with some blanks that are filled in by the user supplying some desired information. In the case of script recognition the interest is more in which of several grammars the current sentence of dialog, or utterance, matches rather than filling in blanks. The blank variables may be used to distinguish between two similar utterances in the script. After the grammars are developed from a script, the dialog is run through a speech recognition engine to relate the dialog to where it occurs in the script.

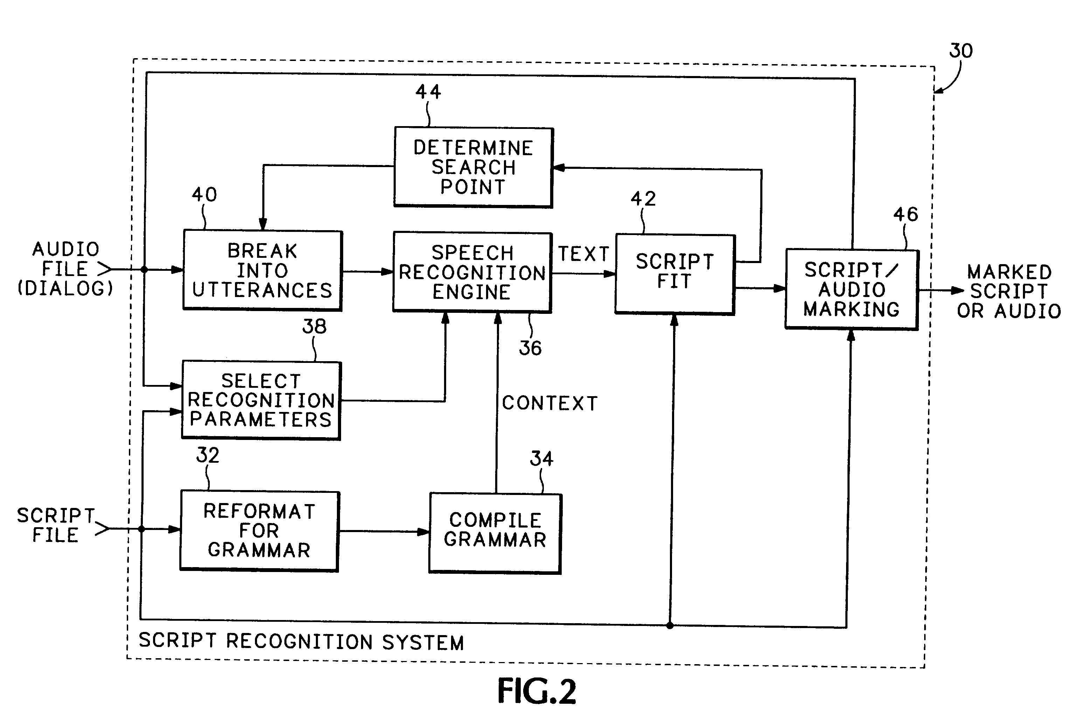

Referring now to Fig. 2 a script recognition system **30** starts with a script file in a specified format, such as ASCII, and an audio file in a specified format, such as .WAV audio files, from the memory **16**. The script file is reformatted into a grammar file in the specified format, i.e., ASCII (Step **32**). The grammar file is compiled (Step **34**) to make a context file, which is a binary coded file that a recognition engine **36** can use. The script and audio files are scanned (Step **38**) to set recognition parameters that are provided to the recognition engine **36**. Some of the parameters include: Start Threshold -- how loud the speech needs to be to start recognizing it; End Threshold -- how quiet the speech needs to be to indicate silence; Silence Duration -- how long a period of silence is needed to indicate the end of an utterance; Allowable Noise Count -- how much noise is allowed in an utterance; Word Search Scope -- trades speed and accuracy, i.e., trims words earlier in the utterance; Min Duration -- minimum duration of an utterance ; and Max Duration -- maximum duration for an utterance. Word recognition is based on the highest probability that a part of an utterance matches a word in the grammar. The following parameters adjust the way probabilities are determined: Insertion Penalty -- penalty to the probability when a new word is added to the search; Language Weight -- weighting of language mode over acoustic evidence (using only acoustic evidence doesn't distinguish between "right" and "Wright", for example); and Grammar Weight -- weighting of bigram to word pair in recognition control, where word pairs treat all valid second words as having an equal probability while bigrams have computed probabilities based on context. Some of these parameters may be set by looking at statistics of audio levels in the input file and the length of utterances put into the grammar file. Parameters also may be adjusted by the feedback from invalid utterances that are returned.

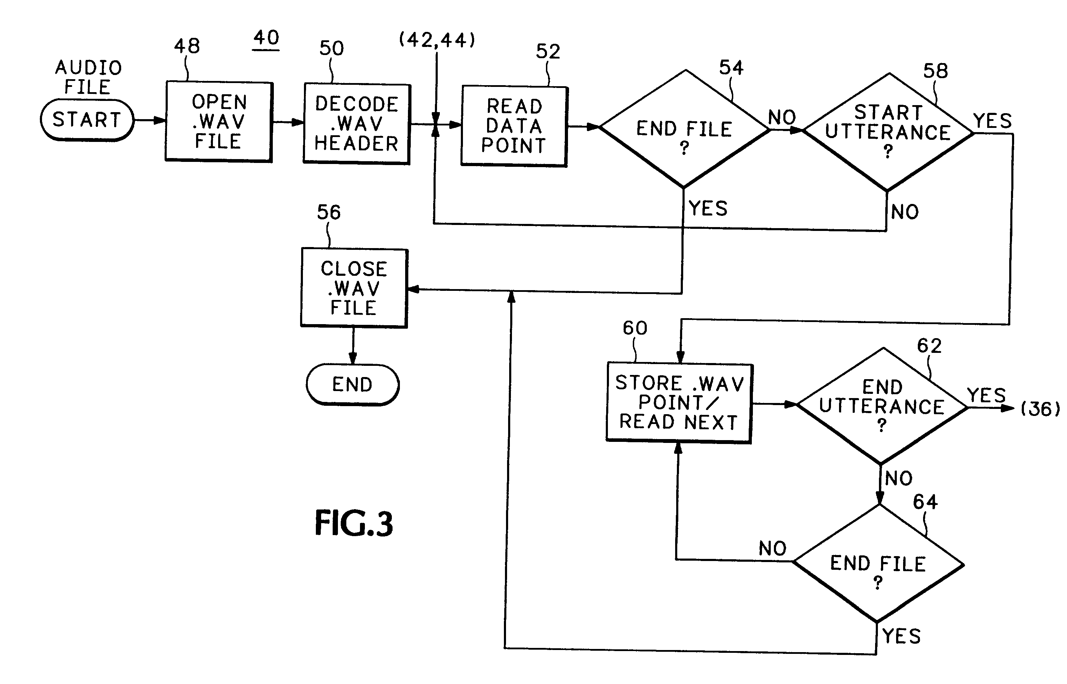

For speech recognition packages that can only process single utterances, the audio file is broken up into utterances (Step **40**). For example, referring to Fig. 3 the audio file in the form of a .WAV file is initially opened at step **48** and the header is decoded at step **50**. An audio data point is read at step **52** and the file is checked at step **54** to see if it is the last data point in the file. If it is the last data point, then the file is closed in step **56** and there are no more utterances in the dialog. Otherwise the data point is tested to determine if it is the first data point related to an utterance in step **58**. If the data point is not the start of an utterance, then control returns to step **52**. Otherwise the data point is stored in step **60** and the next data point is read from the file. The newly read data point is tested in step **62** to determine if it represents the end of the utterance. If not, end of file is checked at step **64**, with exit to step **56** if at the end of file or storage of the data point as part of the utterance and reading of the next data point in step **60**. When the end of the utterance is detected in step **62**, then the utterance is input to the speech recognition engine **36**.

The recognition engine **36** "reads" an utterance and, based upon the context file and recognition parameters, outputs a "guess" at the utterance in the form of a text message. The text message is then matched to the script and checked to see if it makes sense (Step **42**). The information gained from this script fitting step may be used as feedback (Step **44**) to determine new parameters for the recognition and to reenter the break into utterances step **40** at step **52** to determine where the next utterance is taken from the audio file. This may be used for progressive scan of the audio file to minimize the time needed to get a rough match of the audio file to the script file. The script fit output is used either to time mark the script file or to location mark the audio file (Step **46**). The marked script or audio file is provided by the CPU **12** on the monitors **24**, **26** to simplify the editing process.

In any form of film-making, whether it be a series, television drama or the like, the whole production process centers on the script. Once the script is imported into an editing machine in text form, it is parsed into a series of scenes. As each new "take" is digitized, if the soundtrack finds a match with the script, a series of "Reel Ids", the unique identifier for each film or tape reel, and "TimeCodes", the unique identifier for each part of a tape reel, or "KeyCodes", the unique identifier for each part of a film reel, are associated with each scene. Once the parsing is done, and some may have to be entered manually, the editor then may perform the following tasks:
-- By highlighting a part of the script, the editor may depress a button to shown all shots associated with the scene;
-- By highlighting a shot, either in the edit or out of it, the editor may ask the editing machine to show all similar shots; and
-- By selecting bits of dialog in the audio tracks the editor may ask to listen to alternatives.

The technique described above eliminates a completely manual one of associating each scene as it is digitized to the lines of the script. The manual technique does not allow matching of each line of dialog and, as some scenes may be several minutes long, it actually is more of a nuisance than a help.

A sample grammar corresponding to a script file for a portion of a video image sequence, such as a movie or television show, has as an example four utterances from the corresponding dialog in the audio file, as shown below:
"How are you today"
"We are doing fine"
"Do you have any news for me"
"I can only repeat what I said yesterday"

The audio file and the context file derived from the sample grammar file are input to the recognition engine 38 to form the "guess" for each utterance. The "guess" is then input to the script fit step **42** to find a match to the script. When a match occurs, the corresponding time code of the image sequence is marked on the script file, or alternatively the script location is marked in the audio file.

Vendors of current speech recognition packages include IBM, Speech Systems, Inc., Dragon Systems, Lemout & Hauspie, Kurzweil, Microsoft, Philips, BBN Hark, Verbex and Voice Control Systems. Features for consideration in the script recognition scenario include: continuous or discrete speech; speaker dependent or independent; specialized or standard hardware required; custom or off-the-shelf solutions, operating system, vocabulary size and API or higher level interface. Industry trends are toward speaker independence, more standard APIs and running on the main CPU instead of using sound cards, and possibly a move toward the Windows NT operating environment.

Thus the present invention provides script recognition using speech recognition to assist an editor in correlating a script to dialog associated with an image sequence, such as a move or television show.

## Claims

1. A method of script recognition for an editing system comprising the steps of:
converting a script file associated with an image sequence to a context file;
deriving text segments from an audio file as a function of the context file and specified parameters;
determining a fit for each text segment with the script file to correlate the audio file with the script file.

2. The method as recited in claim 1 further comprising the step of selecting the specified parameters as a function of the audio file and the script file.

3. The method as recited in claim 1 further comprising the step of marking the script file with a time stamp associated with the image sequence as a result of the correlation of the audio file with the script file.

4. The method as recited in claim 1 wherein the converting step comprises the steps of:
reformatting the script file to form a grammar file; and
compiling the grammar file as the context file.

5. The method as recited in claim 1 wherein the deriving step comprises the steps of:
breaking the audio file into a plurality of utterances; and
for each utterance deriving a corresponding text segment to produce the text segments.
